Europäisches Patentamt

(19) European Patent Office (11) Numéro de publication: **0 233 905**

Office européen des brevets **B1**

(12) **FASCICULE DE BREVET EUROPÉEN**

(45) Date de publication du fascicule du brevet: (51) Int. Cl. ⁴: **F 16 H 19/04**
17.01.90

(21) Numéro de dépôt: **86904848.8**

(22) Date de dépôt: **08.08.86**

(86) Numéro de dépôt international:
**PCT/FR 86/00283**

(87) Numéro de publication international:
**WO 87/01167 (26.02.87 Gazette 87/05)**

(54) **MECANISME DE TRANSFORMATION DU MOUVEMENT ALTERNATIF D'UN PISTON EN MOUVEMENT CIRCULAIRE D'UN ARBRE.**

(30) Priorité: **13.08.85 FR 8512436**

(43) Date de publication de la demande:
**02.09.87 Bulletin 87/36**

(45) Mention de la délivrance du brevet:
**17.01.90 Bulletin 90/03**

(84) Etats contractants désignés:
**AT BE CH DE FR GB IT LI LU NL SE**

(56) Documents cité:
**DE-C-374 054**
**FR-A-358 129**
**FR-A-612 889**
**FR-A-2 093 119**
**FR-E-33 075**

(73) Titulaire: **HOVETE Société Civile d'Etudes d'Innovations de Recherches et d'Applications Industrielles**
**2 Rue Rossini**
**F-75009 Paris (FR)**

(72) Inventeur: **Hovaguimian, Jacques**
**11, avenue Ollivary**
**F-13008 Marseille (FR)**

(74) Mandataire: **Hud, Robert**
**Cabinet COLLIGNON 6, rue de Madrid**
**F-75008 Paris (FR)**

## Description

La présente invention concerne un dispositif de transformation d'un mouvement alternatif obtenu sur un piston par la poussée d'un fluide, en un mouvement rotatif récupérable sur un arbre ou réciproquement comme décrit dans le préambule de la seule revendication et comme connu du document DE-C-374 054.

Cette transformation est traditionnellement obtenue par un ensemble bielle-manivelle avec les inconvénients inhérents à ce système. En effet, la décomposition de l'effort sur la bielle fait apparaître une composante horizontale, absorbant de l'énergie. De plus, pour une vitesse constante de rotation de l'arbre, celle du piston suit une fonction sinusoïdale, d'où une vitesse linéaire moyenne réduite.

En utilisation dans les moteurs thermiques, l'ensemble bielle-manivelle rend nécessaire de recourir à différents artifices tels qu'avance à l'allumage et à l'échappement, le déplacement du piston suivant une loi mathématique immuable.

La présente invention a pour objet de remédier à ces inconvénients et elle propose à cet effet un dispositif de transformation d'un mouvement alternatif en un mouvement rotatif qui, tout en étant d'une grande simplicité mécanique, permet d'obtenir un rendement optimal sans nécessiter la mise en oeuvre d'avance à l'allumage et à l'échappement des moteurs thermiques.

Selon l'invention, le dispositif comporte essentiellement deux crémaillères liées au piston du moteur et qui entraînent alternativement un secteur denté porté par l'arbre moteur, deux cames étant également portées par l'arbre moteur et servant de guides pour quatre galets fixés sur l'ensemble mobile crémaillère-piston comme indiqué dans la seule revendication.

Pour bien faire comprendre l'invention, on en décrira ci-après un exemple de réalisation en référence au dessin schématique annexé dans lequel:

- la figure 1 montre un dispositif à deux crémaillères coopérant avec un secteur denté;
- la figure 2 montre en vue de face et en coupe verticale l'une des cames calées sur l'arbre de sortie; et
- la figure 3 montre une forme de réalisation avec deux pistons opposés.

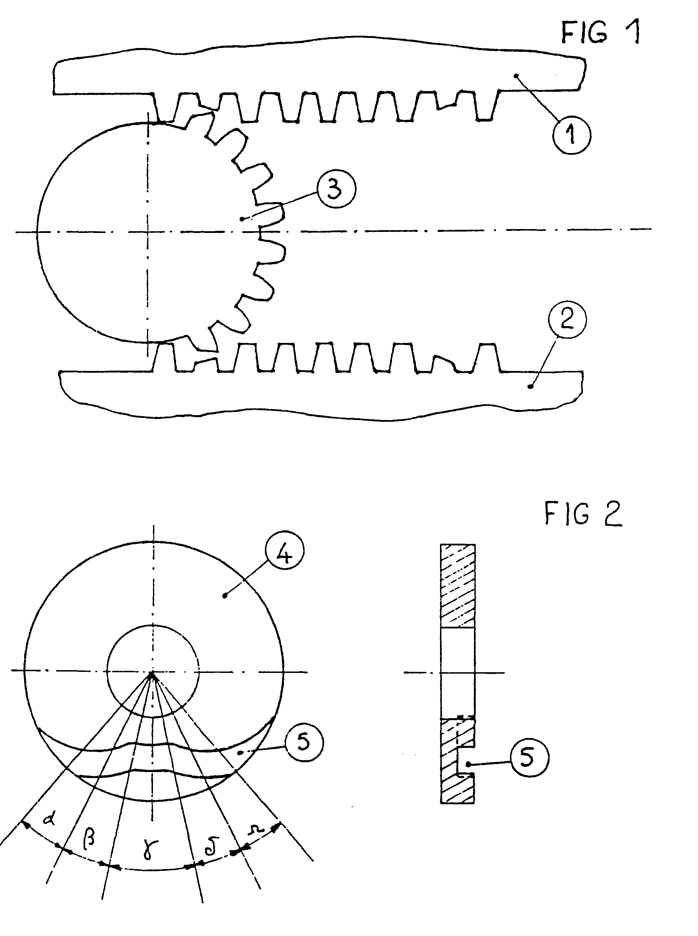

A la figure 1, on a représenté le dispositif selon l'invention, composé de deux crémaillères 1, 2 solidaires des pistons (non représentés sur cette figure) et se déplaçant en un seul bloc pour engrener alternativement avec un secteur denté 3 calé sur l'arbre de sortie. Dans l'exemple choisi, les crémaillères 1, 2 comportent neuf dents et le secteur denté 3 solidaire de l'arbre de sortie comporte huit dents, pour un pignon de même module de vingt dents. La deuxième et l'avant-dernière dents de chaque crémaillère 1, 2 ainsi que les dents extrêmes du secteur denté 3 sont tronquées, comme représenté sur la figure 1. Cette figure montre le secteur denté 3 en position intermédiaire, désolidarisé des crémaillères 1, 2.

Pour assurer une continuité d'entraînement deux cames 4, dont l'une est représentée à la figure 2, sont calées sur l'arbre de sortie pour prendre le relais. Une gorge 5 ménagée dans la came 4 guide un galet solidaire de l'ensemble pistons-crémaillères. La gorge 5 se décompose en cinq zones:

- zone d'angle $\alpha$, correspondant à un entraînement simultané de l'arbre de sortie par came et crémaillère à une distance V,
- zone d'angle $\beta$, correspondant à une décélération de l'ensemble crémaillères-pistons,
- zone d'angle $\gamma$, arrêt de cet ensemble,
- zone d'angle $\delta$, accélération de l'ensemble,
- zone d'angle $\Omega$, entraînement simultané par came et crémaillère à la vitesse -V.

Pendant les fins de course, la possibilité de modifier le tracé de la gorge des cames permet la maîtrise de la vitesse de déplacement de l'ensemble mobile, donc la variation du volume de la chambre de combustion à la demande, suivant le combustible utilisé.

Pendant l'entraînement par crémaillère la vitesse linéaire du piston est constante et correspond à la vitesse moyenne des systèmes d'entraînement par bielle-manivelle. Cette vitesse linéaire peut donc être augmentée, tout en restant au-dessous de la vitesse de grippage du frottement des segments sur les cylindres, la vitesse de rotation de l'arbre de sortie étant majorée dans les mêmes proportions.

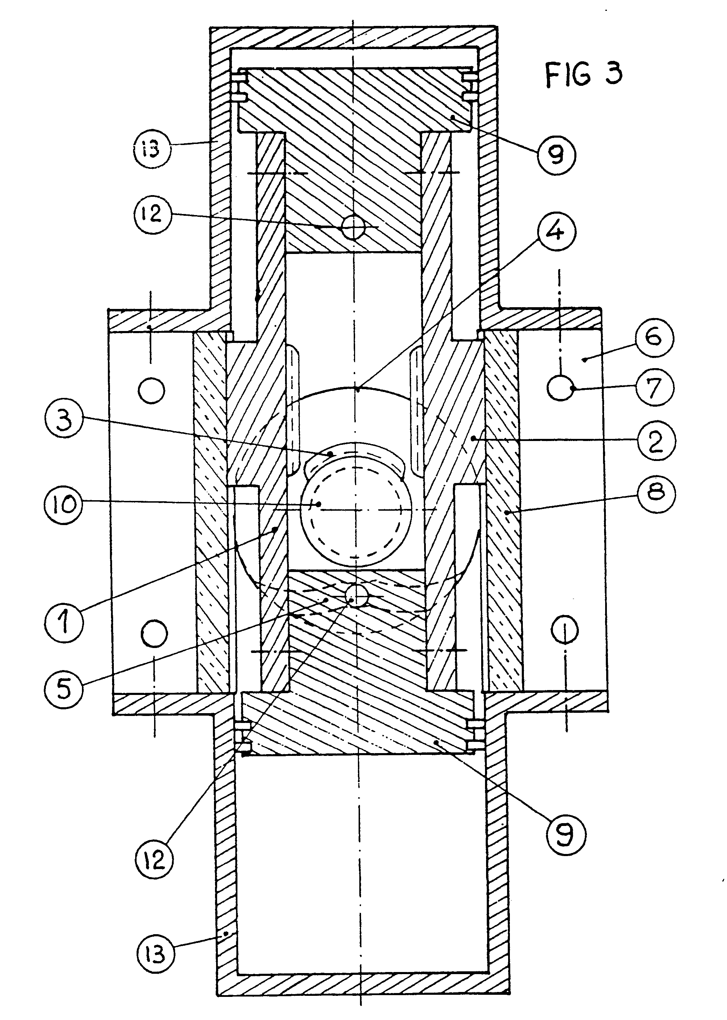

A la figure 3 on a représenté une forme de réalisation avec deux pistons opposés. Selon cette réalisation, deux demi-corps 6 sont assemblés par quatre boulons 7 et prennent en sandwich deux glissières 8 en bronze qui guident les deux crémaillères 1, 2 réunissant les deux pistons 9. Sur l'arbre de sortie 10 sont assemblés le secteur denté 3 et les cames 4, la gorge 5 de ces cames entraînant les pistons 9 par l'intermédiaire des galets 12 portés par ceux-ci. Les cylindres à l'intérieur desquels coulissent les pistons 9 sont représentés par les deux chapeaux 13 qui coiffent les deux demi-corps.

Le fonctionnement se comprend immédiatement d'après la description qui précède, le déplacement dans un sens de l'ensemble constitué par les pistons 9 et les crémaillères 2, lors de l'explosion dans l'un des cylindres, produisant l'engrènement de l'une des crémaillères 2 avec le secteur denté 3 et donc l'entraînement en rotation de l'arbre 10. A la fin de cette période d'engrènement, la came 4 coopère avec le galet 12 de l'un des pistons pour assurer la continuité de l'entraînement, puis l'explosion se produit dans l'autre cylindre provoquant le déplacement de l'ensemble 9, 2 en sens inverse et donc l'engrènement de l'autre crémaillère 1 avec le secteur 3 pour continuer l'entraînement de l'arbre 10.

## Revendication

Dispositif de transformation d'un mouvement alternatif d'un piston en mouvement continu rotatif d'un arbre ou réciproquement, comportant deux crémaillères (1, 2) solidaires du piston (9) et qui entraînent alternativement en rotation un secteur denté (3) fixé sur ledit arbre (10), deux cames (4) étant également montées sur l'arbre (10) et guidant quatre galets (12) fixés sur l'ensemble mobile crémaillère-piston, la came (4) de commande du galet présentant une gorge (5) qui comporte des zones différentes qui coopèrent avec le galet (12), caractérisé en ce que ladite gorge (5) se décompose en cinq zones dont une zone est concentrique à l'axe de rotation de l'arbre (10) correspondant au temps d'arrêt du piston en fin de course.

## Patentanspruch

Vorrichtung zum Umwandeln der hin- und hergehenden Bewegung eines Kolbens in die stetige Drehbewegung einer Welle, oder umgekehrt, umfassend zwei Zahnstangen (1, 2) in fester Verbindung mit dem Kolben (9), die abwechselnd ein Zahnsegment (3) in Drehung versetzen, das an der Welle (10) befestigt ist, wobei zwei Kurvenscheiben (4) ebenfalls an der Welle (10) montiert sind und vier an der beweglichen Baugruppe Zahnstange-Kolben befestigte Rollen (12) führen, wobei die Kurvenscheibe (4) zum Antrieb der Rolle eine Auskehlung (5) aufweist, die mit der Rolle (12) zusammenwirkende unterschiedliche Bereiche umfaßt, dadurch gekennzeichnet, daß die Auskehlung (5) in fünf Bereiche unterteilt ist, von denen einer konzentrisch zur Drehachse der Welle (10) ist, entsprechend der Haltezeit des Kolbens am Ende des Laufwegs.

## Claim

Device for converting the reciprocating motion of a piston into continuous rotary motion of a shaft or conversely, comprising two racks (1, 2) integral with the piston (9) and which in alternation rotatably drive a toothed sector (3) affixed to the said shaft (10), two cams (4) being also mounted on the shaft (10) and guiding four rollers (12) affixed to the mobile rack/piston assembly, the cam (4) for guiding the roller having a groove (5) which includes different zones which cooperate with the roller (12), characterised in that the said groove (5) divides into five zones of which one zone is concentric with the axis of rotation of the shaft (10) corresponding to the stoppage time of the piston at the end of its stroke.

FIG 1

FIG 2

FIG 3